# EUROPEAN PATENT SPECIFICATION

(11) **EP 4 245 873 B1**
(45) Date of publication and mention of the grant of the patent: **14.05.2025**
(21) Application number: 21890698.0
(22) Date of filing: 10.08.2021
(51) Int. Cl.: C22C 19/05, C22C 1/02, C22F 1/10

(54) **CREEP-RESISTANT, LONG-SERVICE-LIFE, NICKEL-BASED DEFORMATION SUPERALLOY AND METHOD FOR PREPARATION THEREOF AND APPLICATION THEREOF**
KRIECHFESTE, LANGLEBIGE, NICKELBASIERTE VERFORMUNGSSUPERLEGIERUNG UND VERFAHREN ZU IHRER HERSTELLUNG UND VERWENDUNG
SUPERALLIAGE À DÉFORMATION À BASE DE NICKEL RESISTANT AU FLUAGE ET A LONGUE DURÉE DE VIE, PROCÉDÉ POUR SA PREPARATION ET APPLICATION DE CELUI-CI

(30) Priority: 12.11.2020 CN 202011262753
(43) Date of publication of application: 20.09.2023
(73) Proprietor: China United Gas Turbine Technology Co., Ltd., Beijing 100016 (CN); Beijing Beiye Functional Materials Corporation, Beijing 100192 (CN)
(72) Inventor: SHU, Guogang, Beijing 100016 (CN); WEN, Xinli, Beijing 100016 (CN); DONG, Jianxin, Beijing 100016 (CN); ZHANG, Qingquan, Beijing 100016 (CN); JIANG, He, Beijing 100016 (CN); LI, Zhenrui, Beijing 100016 (CN); LIU, Wei, Beijing 100016 (CN); YU, Zhiyong, Beijing 100016 (CN); PENG, Jie, Beijing 100016 (CN); LIU, Haibo, Beijing 100016 (CN); WEI, Ran, Beijing 100016 (CN); LI, Guochao, Beijing 100016 (CN)
(74) Representative: Maiwald GmbH
(86) International application number: PCT/CN2021/111913
(87) International publication number: WO 2022/100169

(56) References cited:
- CN-A- 103 160 710
- CN-A- 108 467 972
- CN-A- 108 467 972
- CN-A- 110 300 811
- CN-A- 112 575 228
- US-A1- 2020 239 993

## Description

### FIELD

The present invention relates to a field of metal materials, specifically to a creep-resistant, long-life wrought nickel-based high-temperature alloy, in particular to a method for preparing the creep-resistant, long-life wrought nickel-based high-temperature alloy, and further relates to use of the creep-resistant, long-life wrought nickel-based high-temperature alloy.

### BACKGROUND

Equipment such as an aerospace engine and a gas turbine is provided with a large number of precision hot-end parts, which are characterized by exhibiting a good dimensional accuracy under high-temperature and heavy-load conditions to ensure functional stability, and are generally made of a deformed high-temperature alloy (also referred as a wrought superalloy). These parts include barrels, pipes and fasteners, etc., which are complex in shapes and resistant to the high temperature (generally 600 to 800 °C), and are processed by multiple processes such as cold bending, welding, turning, and milling of plates, pipes or bars. It has high requirements on processing performance, welding performance, creep resistance, and service life of the alloy. The existing alloys include Nimonic263, R-41, Waspaloy, Haynes282, HastelloyX, Haynes230, Inconel718, etc.

With the continuous development of design level and application technology of the aerospace engine and the gas turbine, the initial gas temperature is getting higher and higher. For example, for the gas turbine, the initial gas temperature of the existing most advanced G-class and H-class gas turbines has reached a temperature of 1450 to 1500 °C. An initial gas temperature of a future J-class gas turbine will reach 1600 to 1700 °C, and the alloy body of precision hot-end parts of the aerospace engine and the gas turbine will be exposed to a temperature of 800 to 950 °C. Therefore, increasingly stringent requirements are placed on the mechanical performances at the high-temperature from 800 to 950 °C of the alloys.

Although Nimonic263, HastelloyX, and Haynes230 alloys have good processability, these alloys can only serve for a long time below 800 °C, and their high-temperature strength and creep resistance are seriously insufficient above 800 °C. Although Inconel718 alloy has good processability, it can only serve below 650 °C, and stability loss of the alloy structure and performance degradation will happen at a higher temperature. R-41 and Waspaloy have a high strengthening phase γ' content and a fast precipitation rate. It is difficult for blanks of these alloys to be subjected to hot processing (forging, hot rolling), heat treatment and cold processing (cold bending, turning, welding, etc.), and thus they are not suitable for the manufacture of the precision hot-end parts that need to be subjected to complex machining processes in the aerospace engine and the gas turbine. Moreover, a creep plastic elongation (εₚ) of R-41 is about 1% under a condition of 816 °C, 221 MPa and 100 h, and a value corresponding to Waspaloy is more than 1%. The service life (τ) of these two alloys is 100 h or less under a condition of 89 MPa and 927 °C, which shows that the creep resistance and the service life of these two alloys do not meet the design requirements of the advanced aerospace engine and the gas turbine. Haynes282 alloy has good mechanical performances at both room temperature and high temperature, and is easy to be processed and welded. However, it has the following three shortcomings. 1) The creep resistance is low, and the creep plastic elongation is about 1% under the condition of 816 °C, 221 MPa, and 100 h. 2) The service life is insufficient, and the service life is 200 h or less under the condition of 89 MPa and 927 °C. 3) The service temperature is low. Since the maintenance cycle of the gas turbine is considered to be about 8 years in the practical engineering applications, the maximum service temperature of the alloy is strictly limited to about 800 °C to ensure that the part made of Haynes282 alloy can safely pass through the 8-year maintenance cycle.

Therefore, there is still a need for developing a wrought nickel-based alloy with excellent creep resistance and service life.

US2020/239993A1 relates to a Ni-based alloy characterized by having a composition containing, in terms of wt %, 15.00-25.00% Cr, 5.00-15.00% Co, 1.00% to less than 12.00% Mo, 1.50-2.50% Ti, 1.00-2.00% Al, 0.20-1.00% Nb, and 0.0010-0.10% C, and in terms of mass ppm, 10-200 ppm P, 30-250 ppm B, and 30-200 ppm N, the remainder comprising Ni and unavoidable impurities.

CN108467972A relates to a high-temperature-capability nickel-base deformable high-temperature alloy comprising, by mass, 0.005-0.5% of Sc, 10.0-20.0% of Cr, 5.0-25.0% of Co, 0.1-8.0% of Mo, 0.1-5.0% of W, 0.1-5.0% of Al, 0.1-5.0% of Ti, 0.1-6.0% of Nb, 0.1-2.0% of V, 0.001-0.15% of C, 0.001-0.06% of B, 0.001-0.10% of Mg, 0.001-0.10% of Ce, 0.001-0.10% of La, 0-0.10% of Y, and the balance Ni and inevitable impurity elements.

### SUMMARY

The invention is set out in the appended set of claims.

The present invention is based on the inventors' discovery and understanding of the following facts and problems. The advanced aerospace engine and gas turbine not only require extremely high machining accuracy and assembly accuracy for the precision hot-end parts, but also require that no or less plastic deformation occurs during the long-term service at a high temperature from 800 to 950 °C, that is, the alloy is required to have excellent creep resistance to avoid failure or damage of the parts before the maintenance cycle arrives and avoid difficulties in disassembly and replacement of the parts during maintenance. In addition, it is desired to further extend the maintenance cycle of the precision hot-end parts. Therefore, stringent requirements are put forward for the high-temperature service life of the alloy. In terms of specific properties, it is desired for the alloy to have a creep plastic elongation (εₚ) of 0.5% or less under the condition of 816 °C, 221 MPa, and 100 h, a service life (τ) of 200 h or more under the condition of 89 MPa and 927 °C, and other main mechanical properties not lower than those of the existing alloys. The existing alloys for the precision hot-end parts, such as Nimonic263, R-41, Waspaloy, Haynes282, HastelloyX, Haynes230, Inconel718, etc., cannot meet the above-mentioned creep resistance and long life requirements.

The present invention aims to solve at least one of the technical problems in the related art at least to a certain extent.

Accordingly, in embodiments of a first aspect of the present invention, a creep-resistant, long-life wrought nickel-based high-temperature alloy is provided, which has the excellent creep resistance and the long service life, that is, has the creep plastic elongation of 0.5% or less measured at 816 °C, 221 MPa, and 100 h, and the service life of 200 h or more measured at 89 MPa and 927 °C, so that the alloy can meet the requirements for the design and the use of the advanced aerospace engine and gas turbine, and is suitable for manufacturing precision hot-end parts with the long service life in the advanced aerospace engine and gas turbine and other equipment.

The creep-resistant, long-life wrought nickel-based high-temperature alloy according to the embodiments of the first aspect of the present invention includes: by weight, 0.04% to 0.08% of C, 18.50% to 21.50% of Cr, 9.00% to 11.00% of Co, 8.00% to 9.00% of Mo, 2.00% to 3.00% of Al, 1.10% to 1.49% of Ti, 0.81% to 2.00% of Nb, 0.003% to 0.009% of B, 0.001% to 0.10% of Sc, no more than 0.02% of Zr, and the balance nickel and inevitable impurities. Contents in weight percentage of Al, Ti and Mo in the alloy satisfy a formula of 11.59% ≤ Al + Ti + Mo ≤ 13.0%. The impurities are W ≤ 0.50%, Fe ≤ 1.50%, Si ≤ 0.10%, Mn ≤ 0.10%, P ≤ 0.008%, S ≤ 0.008%, Ta ≤ 0.10%, and Cu ≤ 0.20%

The creep-resistant, long-life wrought nickel-based high-temperature alloy according to the embodiments of the first aspect of the present invention has the following advantages and brings the following technical effects. First, the strengthening element design scheme of high amount of Al, low amount of Ti, and high amount of Nb is adopted in the embodiments of the present invention, and the traditional strengthening phase of Ni₃ (Al, Ti) has been modified to form a strengthening phase of Ni₃ (Al, Ti, Nb) containing a higher Al content and a further element Nb, which has a better high-temperature resistance than the traditional strengthening phase of Ni₃ (Al, Ti). Second, Sc is added in the alloy of the embodiments of the present invention, the addition of Sc has introduced a kind of new strengthening mechanism for the alloy of the embodiments of the present invention, forming a composite strengthening phase of Ni₃ (Al, Ti, Nb) containing Sc, which has an even better high-temperature resistance and a more stable than the traditional strengthening phase Ni₃ (Al, Ti) and the modified Ni₃ (Al, Ti, Nb), thus significantly improving the creep resistance and service life of the alloy. Third, Sc added in the alloy of the embodiments of the present disclosure has a pre-processing effect for molten steel. Sc can be used to refine the as-cast structure and significantly improve the dendritic segregation of the ingot. Therefore, on the one hand, it improves the hot workability of the alloy, solves the cracking problem of the alloy in the direction of tensile stress, and prevents the alloy from cracking during heat deformation such as forging and hot rolling; on the other hand, the alloy ingot does not need to be subjected to a long-time diffusion annealing at a high temperature, or it only needs a short-time diffusion annealing, thus reducing energy consumption and production cost, shortening production cycle, and improving production efficiency. Fourth, Sc added in the embodiments of the present invention has a post-processing effect for grain boundary, that is, not only purifies molten steel, but also can still purify and strengthen the grain boundary during and after the liquid-solid transformation, making it difficult for S, P, five harmful elements and other inevitable low-melting impurity elements to segregate at the grain boundary, and preventing the grain boundary from forming creep voids at the high temperature. Fifth, in the alloy of the embodiments of the present invention, contents in weight percentage of Al, Ti and Mo are limited to satisfy the formula of 11.59% ≤ Al + Ti + Mo ≤ 13.0%, so that the alloy not only has the excellent creep resistance and service life, but also has an excellent welding performance, and under the condition of 816°C, 221 MPa, and 100 h, the creep plastic elongation of the wrought nickel-based high-temperature alloy is 0.5% or less in the embodiments of the present invention. Under the condition of 89 MPa and 927 °C, the service life of the alloy reaches 200 h or more, which can meet the requirements for the design and the use of the advanced aerospace engine and gas turbine, and makes the alloy suitable for manufacturing the precision hot-end parts for long-term service in the advanced aerospace engine and gas turbine and other equipment. Sixth, the alloy of the embodiments of the present invention has the excellent creep resistance and service life, as well as the density no greater than 8.25 g/cm³, so the alloy is lightweight, which is beneficial to reduce fuel consumption of the aerospace engine and to improve the maneuverability, and makes vibration during operation of the gas turbine as small as possible to avoid vibration damage.

Based on the creep-resistant, long-life wrought nickel-based high-temperature alloy of the embodiments of the first aspect of the present invention, contents in weight percentage of Al, Sc and Ti in the alloy satisfy a formula: 1.40% ≤ (Al - 1.8Sc)/Ti ≤ 2.6%.

Based on the creep-resistant, long-life wrought nickel-based high-temperature alloy of the embodiments of the first aspect of the present invention, the contents in weight percentage of Al, Sc and Ti in the alloy satisfy a formula: 2.22% ≤ (Al - 1.8Sc)/Ti ≤ 2.25%.

Based on the creep-resistant, long-life wrought nickel-based high-temperature alloy of the embodiments of the first aspect of the present invention, it includes: by weight, 0.04% to 0.08% of C, 18.50% to 21.50% of Cr, 9.00% to 11.00% of Co, 8.00% to 9.00% of Mo, 2.00% to 3.00% of Al, 1.10% to 1.49% of Ti, 0.81% to 2.00% of Nb, 0.003% to 0.009% of B, 0.001% to 0.10% of Sc, and the balance nickel and the inevitable impurities. The contents of Al, Ti and Mo in the alloy satisfy the formula of 11.59% ≤ Al + Ti + Mo ≤ 13.0%, and contents in weight percentage of Al, Sc and Ti in the alloy satisfy a formula of 2.22% ≤ (Al - 1.8Sc)/Ti ≤ 2.25%.

In embodiments of a second aspect of the present invention, use of a creep-resistant, long-life wrought nickel-based high-temperature alloy in an aerospace engine is provided.

The creep-resistant, long-life wrought nickel-based high-temperature alloy for use in the aerospace engine according to the embodiments of the second aspect of the present invention has the following advantages and technical effects. The creep-resistant, long-life wrought nickel-based high-temperature alloy of the embodiments of the first aspect of the present invention meets the requirements for the design and the use of the advanced aerospace engine, and can be used in precision devices of the advanced aerospace engine.

In embodiments of a third aspect of the present invention, use of a creep-resistant, long-life wrought nickel-based high-temperature alloy in a gas turbine is provided.

The creep-resistant, long-life wrought nickel-based high-temperature alloy for use in the gas turbine according to the embodiments of the third aspect of the present invention has the following advantages and technical effects. The creep-resistant, long-life wrought nickel-based high-temperature alloy of the embodiments of the first aspect of the present invention meets the requirements for the design and the use of the gas turbine, and can be used in precision devices of the gas turbine.

In embodiments of a fourth aspect of the present invention, a method for preparing the creep-resistant, long-life wrought nickel-based high-temperature alloy is provided, including the following steps:
a. taking a designed amount of a raw material of the alloy in the embodiments of the first aspect of the present invention, smelting under vacuum, refining to remove gases, and casting into an alloy ingot under vacuum; and
b. performing forging-cogging on the alloy ingot obtained in the step a into an electrode rod directly without diffusion annealing, re-melting the electrode rod to obtain a further alloy ingot, performing the forging-cogging to form a desired blank, and performing heat treatment after processing.

The method for preparing the creep-resistant, long-life wrought nickel-based high-temperature alloy according to the embodiments of the fourth aspect of the present invention has the following advantages and technical effects. The wrought nickel-based high-temperature alloy prepared by the method of the embodiments of the present invention has the excellent creep resistance, service life and welding performance, and can meet the requirements for the design and the use of the advanced aerospace engine and gas turbine. Diffusion annealing can be omitted for the alloy ingots prepared by the method of the embodiments of the present invention or it only needs a short-time diffusion annealing, so as to achieve the effect of the uniform composition, which reduces energy consumption, shortens the production cycle and improves the production efficiency.

Based on the method for preparing the creep-resistant, long-life wrought nickel-based high-temperature alloy of the embodiments of the fourth aspect of the present invention, in the step b, when a diameter of the alloy ingot obtained after re-melting is ≤ 200 mm, no diffusion annealing is performed, and when the diameter of the alloy ingot obtained after re-melting is > 200 mm, diffusion annealing is performed, in which a diffusion annealing temperature is from 1150 to 1200 °C, and an annealing time is from 12 to 24 hours.

### DETAILED DESCRIPTION

Reference will be made in detail to embodiments of the present invention. The embodiments described herein are illustrative, and used to generally understand the present invention. The embodiments shall not be construed to limit the present invention.

A creep-resistant, long-life wrought nickel-based high-temperature alloy according to embodiments of a first aspect of the present invention includes: by weight, 0.04% to 0.08% of C, 18.50% to 21.50% of Cr, 9.00% to 11.00% of Co, 8.00% to 9.00% of Mo, 2.00% to 3.00% of Al, 1.10% to 1.49% of Ti, 0.81% to 2.00% of Nb, 0.003% to 0.009% of B, 0.001% to 0.10% of Sc, and the balance nickel and inevitable impurities, in which contents in weight percentage of Al, Ti and Mo in the alloy satisfy a formula of 11.59% ≤ Al + Ti + Mo ≤ 13.0%. The impurities are W ≤ 0.50%, Fe ≤ 1.50%, Si ≤ 0.10%, Mn ≤ 0.10%, P ≤ 0.008%, S ≤ 0.008%, Ta ≤ 0.10%, and Cu ≤ 0.20%. The wrought nickel-based high-temperature alloy of the embodiments of the present invention includes no more than 0.02% of Zr.

According to the creep-resistant, long-life wrought nickel-based high-temperature alloy of the embodiments of the first aspect of the present invention, the following beneficial effects are realized. The strengthening element design scheme of high amount of Al, low amount of Ti, and high amount of Nb is adopted in the embodiments of the present invention, and the traditional strengthening phase of Ni₃ (Al, Ti) has been modified to form a strengthening phase of Ni₃ (Al, Ti, Nb) containing a higher Al content and a further element Nb, which has a better high-temperature resistance than the traditional strengthening phase of Ni₃ (Al, Ti). Sc is added in the alloy of the embodiments of the present invention, the addition of Sc has introduced a kind of new strengthening mechanism for the alloy of the embodiments of the present invention, forming a composite strengthening phase of Ni₃ (Al, Ti, Nb) containing Sc, which has an even better high-temperature resistance and a more stable than the traditional strengthening phase Ni₃ (Al, Ti) and the modified Ni₃ (Al, Ti, Nb), thus significantly improving the creep resistance and service life of the alloy. Sc added in the alloy of the embodiments of the present disclosure has a pre-processing effect for molten steel. Sc can be used to refine the as-cast structure and significantly improve the dendritic segregation of the ingot. Therefore, on the one hand, it improves the hot workability of the alloy, solves the cracking problem of the alloy in the direction of tensile stress, and prevents the alloy from cracking during heat deformation such as forging and hot rolling; on the other hand, the alloy ingot does not need to be subjected to a long-time diffusion annealing at a high temperature, or it only needs a short-time diffusion annealing, thus reducing energy consumption and production cost, shortening production cycle, and improving production efficiency. Sc added in the embodiments of the present invention has a post-processing effect for grain boundary, that is, not only purifies molten steel, but also can still purify and strengthen the grain boundary during and after the liquid-solid transformation, making it difficult for S, P, five harmful elements and other inevitable low-melting impurity elements to segregate at the grain boundary, and preventing the grain boundary from forming creep voids at the high temperature. In the alloy of the embodiments of the present invention, contents in weight percentage of Al, Ti and Mo are limited to satisfy the formula of 11.59% ≤ Al + Ti + Mo ≤ 13.0%, so that the alloy not only has the excellent creep resistance and service life, but also has an excellent welding performance, and under the condition of 816°C, 221 MPa, and 100 h, the creep plastic elongation of the wrought nickel-based high-temperature alloy is 0.5% or less in the embodiments of the present invention. Under the condition of 89 MPa and 927 °C, the service life of the alloy reaches 200 h or more, which can meet the requirements for the design and the use of the advanced aerospace engine and gas turbine, and makes the alloy suitable for manufacturing the precision hot-end parts for long-term service in the advanced aerospace engine and gas turbine and other equipment. The alloy of the embodiments of the present invention has the excellent creep resistance and service life, as well as the density no greater than 8.25 g/cm³, so the alloy is lightweight, which is beneficial to reduce fuel consumption of the aerospace engine and to improve the maneuverability, and makes vibration during operation of the gas turbine as small as possible to avoid vibration damage.

In the embodiments of the first aspect of the present invention, the effect of each component in the creep-resistant, long-life wrought nickel-based high-temperature alloy is as follows.

C in the nickel-based high-temperature alloy mainly suppresses a growth of austenite grains during heating by forming MC-type carbides at the end of solidification, and forms carbides of M₂₃C₆ and the like along the grain boundary during the heat treatment to strengthen the grain boundary, which can alleviate the formation, expansion and merger of creep voids, thereby improving the high-temperature service life of the alloy. When the C content is less than 0.04%, it is not enough to form a sufficient amount of MC and M₂₃C₆. When the C content is too high, the size of MC formed is larger, and Mo, Cr, Ti and Nb in the alloy will be consumed too much. In this case, not only the solid-solution strengthening effect of Mo and Cr is reduced, but also Ti and Nb used for forming the composite strengthening phase of Ni₃ (Al, Ti) and Ni₃ (Al, Ti, Nb) will be reduced, which will have an adverse effect on the high-temperature creep resistance and durable performance of the alloy. Therefore, C should be controlled at an amount of no more than 0.08%.

Cr has a main effect for improving the oxidation resistance of the alloy, and has a certain solid-solution strengthening effect. After aging treatment, Cr can be combined with C to form granular M₂₃C₆ distributed along the grain boundary, which can strengthen the grain boundary. However, when the Cr content is too high, it is easy to form a close-packed phase, which reduces the stability of the long-term microstructure and performance of the alloy. Therefore, its content generally does not exceed 25%. In the embodiments of the present invention, the Cr content is controlled at an amount from 18.50% to 21.50%, considering both the oxidation resistance and the stability of the long-term microstructure and performance.

Co is not only an important solid-solution strengthening element, but also an important precipitation strengthening element. Co solubilizes in the matrix to provide a good solid-solution strengthening effect for the alloy, which can significantly reduce the stacking fault energy of the matrix, and widen and expand the width of dislocations, so that the dislocations will not be bundled and cross-slipped, thereby improving the creep resistance and the service life. Co can also partially replace the elements in the Ni₃Al-type phase precipitation strengthening phase, and improve the stability of the phase in the long-term service. Co can further reduce the solid solubility of Al and Ti in the matrix, promote the precipitation of the γ' strengthening phase and increase the amount of precipitation and the solid-solution temperature. When the Co content is lower than 9%, the high-temperature strength is low. When the Co content is higher than 11%, it is easy to form the η phase that affects its performance during the long-term service. Therefore, the Co content is controlled from 9.00% to 11.00%.

Mo is one of the main solid-solution strengthening elements. It can be solid-soluble in both the alloy matrix and the γ' strengthening phase, and can improve the inter-atomic bonding force, and improve the diffusion activation energy and recrystallization temperature, thereby effectively improving the high-temperature strength. However, when Mo is too high, the long-term high-temperature aging may cause generation of µ phase and reduce the toughness of the alloy. Therefore, the Mo content is controlled from 8.00% to 9.00%.

W has similar physical and chemical properties with Mo. The effect of W in the nickel-based high-temperature alloy is mainly solid-solution strengthening. Its atomic radius is relatively large, for example more than ten percent larger than nickel atomic radius, and W has the solid-solution strengthening effect. However, W is an element that accelerates high-temperature corrosion, and will form harmful δ phases during the long-term service, reducing the strength and toughness of the alloy. In addition, the density of W is relatively high, 19.25 g/cm³, and addition of a small amount of W to the nickel-based alloy will significantly increase the density of the alloy and increase the weight of the manufactured part. Considering that the alloy in the embodiments of the present invention are mainly used in the aerospace engine and the gas turbine, it is beneficial for the materil to be lighter. Therefore, no W is added to the alloy in the embodiments of the present invention.

Al, Ti and Nb are elements forming the strengthening phase γ' in the ageing-strengthened nickel-based alloy. It is generally believed that with the increase of the content of the three elements, the amount of γ' phase is increased, and the high-temperature creep and the durability performance are improved. However, too much γ' phase deteriorates welding performance and impairs workability. In addition, Ti and Nb will combine with C to form MC-type carbides, which will hinder grain boundary growth and grain boundary sliding at the high temperature, and improve the high-temperature mechanical performances. However, too much Ti and Nb will form large-grained MC-type carbides, which will be detrimental to the mechanical performances of the alloy. The present invention finds through researches that the high-temperature mechanical performances of the alloy depend not only on the amount of γ' phase, but also on its component composition and properties. An optimal γ' phase strengthening effect can be obtained by optimizing the ratio of Al, Ti and Nb under the premise that the total amount of Al, Ti and Nb remains unchanged. The strengthening element design scheme of high amount of Al, low amount of Ti, and high amount of Nb is adopted in the alloy of the embodiments of the present invention, and the traditional strengthening phase of Ni₃ (Al, Ti) has been modified to form the strengthening phase of Ni₃ (Al, Ti, Nb) containing a higher Al content, and further elements Nb and Sc. The strengthening phase of Ni₃ (Al, Ti, Nb) has a better high-temperature resistance than the traditional strengthening phase of Ni₃ (Al, Ti), thereby improving the creep resistance and the service life of the alloy. Therefore, the three elements can be controlled at the following specific amounts: 2.00% to 3.00%, preferably 2.50% to 3.00% of Al, 1.10% to 1.49% of Ti, and 0.81% to 2.00% of Nb.

Whether Sc is a rare earth element is still controversial in the academic circle, and its effect cannot be simply equal to the rare earth elements. Although the addition of the rare earths in iron and steel materials has been widely used, the commonly used rare earth elements are La, Ce, Nd, etc. There are few reports on the use of Sc in iron and steel materials. It should be noted that the function of the rare earth elements is less specific in the related art and is normally generalized according to the function of some rare earth elements, resulting in a problem of overgeneralization. It is generally believed that the effect of the rare earth elements is to remove inclusions, purify grain boundaries, improve oxidation resistance and oxide film adhesion, but there is little research and study for the effect of each of the rare earth elements. In the related art, the use of Sc in metal materials is mainly in aluminum alloys. It is generally believed that adding Sc in the smelting process of the aluminum alloy can form an Al₃Sc modifier, improve the solidification nucleation rate, refine the as-cast structure, reduce segregation, and significantly improve the strength and toughness of the alloy. However, there are no detailed scientific reports on the addition of Sc in the high-temperature alloy and its working mechanism. It has been found in the present invention that an appropriate addition of Sc into the alloys of embodiments of the present invention has the following three effects. 1) Sc has the pre-processing effect for the molten steel. Sc improves the solidification nucleation rate, refines the as-cast crystal grains and significantly improves the dendritic segregation of the ingot, Therefore, on the one hand, it improves the hot workability of the alloy, solves the cracking problem of the alloy in the direction of tensile stress, and prevents the alloy from cracking during heat deformation such as forging and hot rolling; on the other hand, the alloy ingot does not need to be subjected to a long-time diffusion annealing at the high temperature, or it only needs a short-time diffusion annealing, thus reducing energy consumption and production cost, shortening production cycle, and improving production efficiency. 2) The addition of Sc has introduced a kind of new strengthening mechanism, forming the composite strengthening phase of Ni₃ (Al, Ti, Nb) containing Sc, which has an even better high-temperature resistance and a more stable than the traditional strengthening phase Ni₃ (Al, Ti) and the modified Ni₃ (Al, Ti, Nb), thus significantly improving the creep resistance and service life of the alloy. 3) Sc has the post-processing effect for the grain boundary, that is, not only purifies molten steel, but also can still purify and strengthen the grain boundary during and after the liquid-solid transformation, making it difficult for S, P, five harmful elements and other inevitable low-melting impurity elements to segregate at the grain boundary, and preventing the grain boundary from forming creep voids at high temperature. Therefore, it can improve the creep resistance, the durability and other high-temperature mechanical performances of the alloy. The addition of Sc contributes to the alloy in the advantages of the creep resistance and the long life in the embodiments of the present invention. When the addition amount of Sc is too small, it is ineffective. When the addition is too much, it will consume too much Al in the alloy to form a large size of Al₃Sc and thus will reduce the formation of the strengthening phase of fine Ni₃(Al, Ti, Nb), which impairs the strength and ductility of the alloy. For the alloy in the embodiments of the present invention, the appropriate Sc content should be controlled from 0.001% to 0.1%.

B has effects in two aspects. Firstly, because the atomic radius of B is very small, only about 85 picometers (for comparison, the atomic radius of Ni is about 135 picometers), B atoms are easily enriched at the grain boundary, making harmful elements with the low melting point not or less segregated at the grain boundary, which improves the bonding force of the grain boundary. Secondly, borides on the grain boundary can prevent grain boundary slippage, cavity initiation and expansion, and thus contributes to the improvement of the creep resistance and the service life of the alloy. However, too much B will deteriorate the hot workability and the welding performance of the alloy. Therefore, the appropriate B content of the alloy is from 0.003% to 0.009% in the embodiments of the present invention.

Fe is a harmful element in the nickel-based high-temperature alloy, but it is unavoidable in industrial production. In the alloy of the embodiments of the present invention, it is allowable for the alloy to include Fe at amount up to no more than 1.50%, which makes it possible to use raw materials and return materials containing trace amounts of Fe in industrial production for economic reasons, thus keeping the production cost of the alloy at a reasonable level.

Zr helps to purify the grain boundary and enhance the bonding force of the grain boundary. Composite addition of Zr and B helps to maintain the high-temperature strength and the service life of the alloy, but excessive Zr will easily cause thermal cracking and damage the welding performance. Zr is controlled at amount of ≤ 0.02% in the alloy in the embodiments of the present invention.

Ni is the most important matrix element and an element for forming the precipitation strengthening phase γ'. Ni is used as the matrix, it can form a solid solution with a large number of alloy elements such as Cr, Mo, Co and C with different effects. The microstructure of Ni-based high-temperature alloy makes the alloy have strong stability, excellent high-temperature strength and toughness, and good machine shaping performance, and the alloy of the present invention is suitable for the manufacture of the creep-resistant, long-life precision hot-end parts of the advanced aerospace engine and gas turbine.

According to the creep-resistant, long-life wrought nickel-based high-temperature alloy of the embodiments of the first aspect of the present invention, contents in weight percentage of Al, Sc and Ti in the alloy satisfy a formula: 1.40% ≤ (Al - 1.8Sc)/Ti ≤ 2.6%, preferably 2.22% ≤ (Al - 1.8Sc)/Ti ≤ 2.25%. The inventors found that for the wrought nickel-based high-temperature alloy of the embodiments of the present invention, when Al, Sc and Ti satisfy a formula of 1.40% ≤ (Al - 1.8Sc)/Ti ≤ 2.6%, the thermal stability of the precipitation phase can be further improved, and the creep resistance and the service life of the wrought nickel-based high-temperature alloy can be further improved. The creep plastic elongation of the alloy can be reduced to 0.2% or less under the condition of 816 °C, 221 MPa, and 100 h, and the service life can reach 300 h or more under the condition of 89 MPa and 927 °C. Especially when 2.22% ≤ (Al - 1.8Sc)/Ti ≤ 2.25%, the service life can reach 330 h or more under the condition of 89 MPa and 927 °C.

In the embodiments of the second aspect of the present invention, use of a creep-resistant, long-life wrought nickel-based high-temperature alloy in an aerospace engine is provided. The creep-resistant, long-life wrought nickel-based high-temperature alloy of the embodiments of the first aspect of the present invention meets the requirements for the design and the use of the advanced aerospace engine, and can be used in precision device(s) of the advanced aerospace engine.

In the embodiments of the third aspect of the present invention, use of a creep-resistant, long-life wrought nickel-based high-temperature alloy in a gas turbine is provided. The creep-resistant, long-life wrought nickel-based high-temperature alloy of the embodiments of the first aspect of the present invention meets the requirements for the design and the use of the gas turbine, and can be used in precision device(s) for the gas turbine.

In the embodiments of the fourth aspect of the present invention, a method for preparing the creep-resistant, long-life wrought nickel-based high-temperature alloy includes the following steps.

In step a), a designed amount of a raw material of the alloy in the embodiments of the first aspect of the present invention is weighted, and is subjected to smelting under vacuum, and after all the raw material is melted, it is refined to remove gases and is cast into an alloy ingot under vacuum.

In step b), forging-cogging is performed on the alloy ingot obtained in the step a) into an electrode rod, and the electrode rod is re-melted and solidified to obtain an alloy ingot. When a diameter of the alloy ingot obtained after re-melting is ≤ 200 mm, diffusion annealing is not performed. When the diameter of the alloy ingot obtained after the re-melting is > 200 mm, diffusion annealing is performed, in which a diffusion annealing temperature is from 1150 to 1200 °C, and an annealing time is from 12 to 24 hours. The alloy ingot is subjected to forging-cogging to obtain a desired blank, is further processed into forge pieces, plates, strips, rods, pipes, wires (including welding wires) or materials for powder metallurgy, and is subjected to heat treatment.

According to the method for preparing the creep-resistant, long-life wrought nickel-based high-temperature alloy in the embodiments of the fourth aspect of the present invention, the prepared wrought nickel-based high-temperature alloy has excellent creep resistance, service life and welding performance, and can meet the requirements for the design and the use of the advanced aerospace engine and the gas turbine. Diffusion annealing can be omitted for the alloy ingots prepared by the preparation method of the embodiments of the present invention or it only needs a short-time diffusion annealing, so as to achieve the effect of the uniform composition, which reduces energy consumption, shortens the production cycle and improves the production efficiency.

According to the method for preparing the creep-resistant, long-life wrought nickel-based high-temperature alloy of the embodiments of the fourth aspect of the present invention, the heat treatment includes performing solid-solution treatment for one time and performing aging for two times. The solid-solution heat treatment is performed first, and the two aging heat treatments are performed after the machine shaping process such as welding and cold bending. The solid-solution treatment is performed at a solid solution temperature from 1100 to 1170 °C with a temperature control accuracy within ±10 °C. A holding time is determined according to a product size, and cooling is performed by air or water. The primary aging is performed at a temperature from 950 to 1010 °C with a temperature control accuracy within ±10 °C for a holding time from 1 to 3 h. Cooling is performed with a cooling rate equivalent to the air cooling. The secondary aging system is performed at a temperature from 750 to 800 °C with a temperature control accuracy within ±10 °C for a holding time from 8 to 10 h, and cooling is performed with a cooling rate equivalent to the air cooling.

The present invention is described in detail below with reference to Examples.

### Example 1

Raw materials with desired purities were selected, weighed according to a design ratio, placed into a vacuum induction melting furnace, and melted under a vacuum condition. After all the raw materials were melted, the vacuum condition of 0.1 to 0.5 Pa was maintained, and refining was performed for 30 to 35 min to remove gases. After refining, the materials were cast into an alloy ingot under the vacuum condition. The alloy ingot was subjected to forging-cogging to obtain an electrode rod. After the electrode rod was re-melted in an electroslag furnace under a protective atmosphere, a further alloy ingot with a diameter of 230 mm was obtained, and this alloy ingot was subjected to diffusion annealing. The diffusion annealing was performed at 1180 °C for 12 h. The forging-cogging temperature was 1100 °C, the alloy ingot was forged into a forge plate with a thickness of 40 mm after three thermal treatments of annealing, normalizing, and quenching, and then the forge plate was rolled into a plate with a thickness of 20 mm and a plate with a thickness of 5 mm through a further thermal treatment. The plate with the thickness of 20 mm was subjected to a solution treatment at 1150 °C for 1 h, water-cooled, and subjected to a first aging treatment at 1010 °C for 2 h followed by an air cooling, and a second aging treatment at 788 °C for 8 h followed by the air cooling, to obtain a wrought creep-resistant, long-life nickel-based high-temperature alloy, and mechanical performances of the alloy were tested. The plate with the thickness of 5 mm was subjected to the solution treatment at 1150 °C for 1 h, and water-cooled. Using a welding wire made of the same material as the plate, two plates with the thickness of 5 mm were welded together by a TIG fusion welding method, and welding performances were tested.

Composition of the alloy prepared in Example 1 is shown in Table 1, and the performances are shown in Table 2.

### Example 2

Raw materials with desired purities were selected, weighed according to a design ratio, placed into a vacuum induction melting furnace, and melted under a vacuum condition. After all the raw materials were melted, the vacuum condition of 0.1 to 0.5 Pa was maintained, and refining was performed for 30 to 35 min to remove gases. After refining, the materials were cast into an alloy ingot under the vacuum condition. The alloy ingot was subjected to forging-cogging to obtain an electrode rod. After the electrode rod was re-melted in an electroslag furnace under a protective atmosphere, a further alloy ingot with a diameter of 200 mm was obtained, and this alloy ingot was not subjected to diffusion annealing. The forging-cogging temperature was 1050 °C, the alloy ingot was forged into a forge plate with a thickness of 40 mm after three thermal treatments of annealing, normalizing, and quenching, and then the forge plate was rolled into a plate with a thickness of 20 mm and a plate with a thickness of 5 mm through a further thermal treatment. The plate with the thickness of 20 mm was subjected to a solution treatment at 1150 °C for 1 h, water-cooled, and subjected to a first aging treatment at 1010 °C for 2 h followed by an air cooling, and a second aging treatment at 788 °C for 8 h followed by the air cooling, to obtain a wrought creep-resistant, long-life nickel-based high-temperature alloy, and mechanical performances of the alloy were tested. The plate with the thickness of 5 mm was subjected to the solution treatment at 1150 °C for 1 h, and water-cooled. Using a welding wire made of the same material as the plate, two plates with the thickness of 5 mm were welded together by a MIG fusion welding method, and welding performances were tested.

Composition of the alloy prepared in Example 2 is shown in Table 1, and the performances are shown in Table 2.

The preparation methods of Examples 3 to 10 are the same as that of Example 1, except that compositions of the alloys are different. The compositions of the alloys prepared in Example 3 to 10 are shown in Table 1, and the performances are shown in Table 2.

### Comparative Example 1

A preparation method of Comparative Example 1 is the same as that of Example 1, except that in the alloy, a sum of weight percentages of Al, Ti and Mo is 11.49%, i.e., Al + Ti + Mo = 11.49%. Composition of the alloy prepared in Comparative Example 1 is shown in Table 1, and the performances are shown in Table 2.

### Comparative Example 2

A preparation method of Comparative Example 2 is the same as that of Example 1, except that in the alloy, a sum of the weight percentages of Al, Ti and Mo is 11.40%, i.e., Al + Ti + Mo = 11.40%. Composition of the alloy prepared in Comparative Example 2 is shown in Table 1, and the performances are shown in Table 2.

### Comparative Example 3

A preparation method of Comparative Example 3 is the same as that of Example 1, except that in the alloy, a sum of the weight percentages of Al, Ti and Mo is 13.34%, i.e., Al + Ti + Mo = 13.34%. Composition of the alloy prepared in Comparative Example 3 is shown in Table 1, and the performances are shown in Table 2.

### Comparative Example 4

A preparation method of Comparative Example 4 is the same as that of Example 1, except that in the alloy, a sum of the weight percentages of Al, Ti and Mo is 13.25%, i.e., Al + Ti + Mo = 13.25%. Composition of the alloy prepared in Comparative Example 4 is shown in Table 1, and the performances are shown in Table 2.

### Comparative Example 5

A preparation method of Comparative Example 5 is the same as that of Example 1, except that in the alloy, the content of Sc is 0.0005%. Composition of the alloy prepared in Comparative Example 5 is shown in Table 1, and the performances are shown in Table 2.

### Comparative Example 6

A preparation method of Comparative Example 6 is the same as that of Example 1, except that in the alloy, the content of Sc is 0.19%. Composition of the alloy prepared in Comparative Example 6 is shown in Table 1, and the performances are shown in Table 2.

### Comparative Example 7

A preparation method of Comparative Example 7 is the same as that of Example 1, except that in the alloy, the content of Nb is 0.25%. Composition of the alloy prepared in Comparative Example 7 is shown in Table 1, and the performances are shown in Table 2.

### Comparative Example 8

A preparation method of Comparative Example 8 is the same as that of Example 1, except that in the alloy, the content of Nb is 2.23%. Composition of the alloy prepared in Comparative Example 8 is shown in Table 1, and the performances are shown in Table 2.

### Comparative Example 9

A preparation method of Comparative Example 9 is the same as that of Example 1, except that in the alloy, the content of Al is 1.45%. Composition of the alloy prepared in Comparative Example 9 is shown in Table 1, and the performances are shown in Table 2.

### Comparative Example 10

A preparation method of Comparative Example 10 is the same as that of Example 1, except that in the alloy, the content of Al is 3.15%. Composition of the alloy prepared in Comparative Example 10 is shown in Table 1, and the performance is shown in Table 2.

### Comparative Example 11

A preparation method of Comparative Example 11 is the same as that of Example 1, except that in the alloy, the content of Ti is 0.95%. Composition of the alloy prepared in Comparative Example 11 is shown in Table 1, and the performances are shown in Table 2.

### Comparative Example 12

A preparation method of Comparative Example 12 is the same as that of Example 1, except that in the alloy, the content of Ti is 1.55%. Composition of the alloy prepared in Comparative Example 12 is shown in Table 1, and the performances are shown in Table 2.

### Comparative Example 13

Comparative Example 13 is a commercial Haynes282 alloy with a known composition disclosed in a patent application with an application No. 201210057737.8, and components of the alloy in Test Example H prepared according to method of the patent application are: 0.088% of C, 19.3% of Cr, 10.8% of Co, 4.6% of Mo, 1.63% of Al, 1.85% of Ti, 0.003% of B, 0.04% of Nb, 0.2% of Fe, 6.1% of W, and the balance Ni. The performances of the alloy in Comparative Example 13 are shown in Table 2.

### Comparative Example 14

Comparative Example 14 is an alloy disclosed in a patent application with an application No. 201910811805.7, and components of the alloy in Example 2 prepared according to method in this patent application are: 0.04% of C, 18.3% of Cr, 9.5% of Co, 8.5% of Mo, 1.5% of Al, 1.9% of Ti, 0.02% of Zr, 0.005% of B, 0.2% of Nb, 0.05% of V, 1.2% of Fe, 0.1% of Si, 0.2% of Mn, 0.006% of P, 0.001% of S, 0.02% of Nd, and the balance Ni. The performances of the alloy in Comparative Example 14 are shown in Table 2.

**Table 1**

| No. | | C | Cr | Co | Mo | Al | Ti | B | Ni | Sc | Nb | Zr | Fe |
|---|---|---|---|---|---|---|---|---|---|---|---|---|---|
| | 1 | 0.06 | 19.50 | 10.03 | 8.65 | 3.00 | 1.35 | 0.004 | balance | 0.002 | 1.10 | -- | 1.06 |
| | 2 | 0.04 | 18.52 | 9.50 | 8.23 | 2.51 | 1.10 | 0.005 | balance | 0.02 | 0.81 | 0.01 | 1.28 |
| | 3 | 0.05 | 21.07 | 10.55 | 9.00 | 2.12 | 1.32 | 0.005 | balance | 0.01 | 0.92 | -- | 1.50 |
| | 4 | 0.06 | 20.00 | 11.00 | 8.82 | 2.34 | 1.49 | 0.003 | balance | 0.009 | 2.00 | 0.01 | 0.54 |
| IE | 5 | 0.08 | 19.12 | 10.05 | 8.05 | 3.00 | 1.14 | 0.009 | balance | 0.02 | 0.85 | -- | 1.06 |
| | 6 | 0.06 | 21.05 | 9.02 | 8.29 | 2.00 | 1.30 | 0.006 | balance | 0.10 | 1.54 | -- | 0.28 |
| | 7 | 0.045 | 20.32 | 10.23 | 8.5 | 2.1 | 1.48 | 0.007 | balance | 0.04 | 0.86 | -- | 0.78 |
| | 8 | 0.062 | 19.82 | 10.13 | 8.6 | 2.2 | 1.46 | 0.006 | balance | 0.1 | 0.92 | -- | 0.62 |
| | 9 | 0.078 | 21.01 | 9.97 | 8.68 | 2.96 | 1.12 | 0.004 | balance | 0.0051 | 0.89 | -- | 0.52 |
| | 10 | 0.041 | 20.23 | 10.20 | 8.52 | 3 | 1.12 | 0.005 | balance | 0.011 | 0.91 | -- | 0.65 |
| | 1 | 0.056 | 18.94 | 10.12 | 8.12 | 2.15 | 1.22 | 0.004 | balance | 0.021 | 0.97 | -- | 0.49 |
| | 2 | 0.064 | 19.02 | 9.89 | 8.15 | 2.11 | 1.15 | 0.007 | balance | 0.009 | 0.98 | -- | 0.65 |
| | 3 | 0.062 | 19.51 | 10.01 | 8.97 | 2.89 | 1.48 | 0.004 | balance | 0.002 | 1.09 | -- | 1.05 |
| | 4 | 0.058 | 19.48 | 10.04 | 8.86 | 2.92 | 1.47 | 0.004 | balance | 0.002 | 1.11 | -- | 1.03 |
| | 5 | 0.061 | 19.51 | 10.02 | 8.67 | 2.99 | 1.33 | 0.004 | balance | 0.0005 | 1.10 | -- | 1.06 |
| CE | 6 | 0.062 | 19.50 | 10.04 | 8.63 | 3.00 | 1.36 | 0.004 | balance | 0.19 | 1.11 | -- | 1.05 |
| | 7 | 0.058 | 19.49 | 10.03 | 8.66 | 2.98 | 1.35 | 0.004 | balance | 0.002 | 0.25 | -- | 1.07 |
| | 8 | 0.062 | 19.52 | 10.02 | 8.64 | 3.00 | 1.34 | 0.004 | balance | 0.002 | 2.23 | -- | 1.06 |
| | 9 | 0.061 | 19.51 | 10.02 | 8.67 | 1.45 | 1.36 | 0.004 | balance | 0.002 | 1.11 | -- | 1.05 |
| | 10 | 0.060 | 19.52 | 10.04 | 8.51 | 3.15 | 1.34 | 0.004 | balance | 0.002 | 1.10 | -- | 1.04 |
| | 11 | 0.062 | 19.48 | 10.05 | 8.63 | 3.00 | 0.95 | 0.004 | balance | 0.002 | 1.09 | -- | 1.07 |
| | 12 | 0.061 | 19.51 | 10.01 | 8.54 | 2.91 | 1.55 | 0.004 | balance | 0.002 | 1.10 | -- | 1.06 |

| | | | | | | | | | | | | | |
|---|---|---|---|---|---|---|---|---|---|---|---|---|---|
| Note: a unit of a content of each element in this table is wt%. | | | | | | | | | | | | | |

**Table 2**

| No. | | (Al - 1.8Sc)/Ti | Al + Ti + Mo | *ε*ₚ, % | *τ*, h | *δ,* % | *R*_{p0.2}, MPa | *R*ₘ, MPa | *A, %* | Welding crack | Density, g/cm³ |
|---|---|---|---|---|---|---|---|---|---|---|---|
| Desired value | | 1.4~2.60 | 11.59~13.0 | ≤0.8 | ≥200 | ≥10.0 | ≥586 | ≥1035 | ≥20 | None | |
| | 1 | 2.22 | 13.00 | 0.162 | 342 | 23.0 | 762 | 1125 | 36.5 | None | 8.14 |
| | 2 | 2.25 | 11.84 | 0.164 | 334 | 33.0 | 725 | 1120 | 35.2 | None | 8.21 |
| | 3 | 1.59 | 12.44 | 0.164 | 328.5 | 26.5 | 730 | 1132 | 35.5 | None | 8.20 |
| | 4 | 1.56 | 12.65 | 0.151 | 325.6 | 21.3 | 732 | 1115 | 37 | None | 8.22 |
| IE | 5 | 2.60 | 12.19 | 0.152 | 319 | 22.8 | 768 | 1125 | 34.4 | None | 8.14 |
| | 6 | 1.40 | 11.59 | 0.142 | 324.5 | 20.4 | 730 | 1130 | 35.2 | None | 8.24 |
| | 7 | 1.37 | 12.08 | 0.483 | 232 | 18.3 | 746 | 1142 | 33.5 | None | 8.23 |
| | 8 | 1.38 | 12.26 | 0.452 | 209 | 19.5 | 729 | 1131 | 32.2 | None | 8.23 |
| | 9 | 2.63 | 12.76 | 0.232 | 258 | 15.6 | 752 | 1140 | 30.6 | None | 8.12 |
| | 10 | 2.66 | 12.64 | 0.219 | 248 | 15.8 | 758 | 1150 | 29.5 | None | 8.14 |
| | 1 | 1.73 | 11.49 | 0.52 | 212 | 20.2 | 621 | 1012 | 36.8 | None | 8.25 |
| | 2 | 1.82 | 11.40 | 0.637 | 202 | 19.8 | 596 | 995 | 38.5 | None | 8.27 |
| | 3 | 1.95 | 13.34 | 0.152 | 298 | 16.0 | 812 | 1321 | 22.3 | Yes | 8.15 |
| | 4 | 1.98 | 13.25 | 0.163 | 306 | 10.2 | 806 | 1296 | 23.5 | Yes | 8.15 |
| | 5 | 2.25 | 12.99 | 0.878 | 103.5 | 23.0 | 735 | 1128 | 32.0 | None | 8.14 |
| | 6 | 1.95 | 12.99 | 1.389 | 45.0 | 5.0 | 752 | 1108 | 30.2 | None | 8.14 |
| CE | 7 | 2.20 | 12.99 | 0.808 | 180.0 | 21.0 | 723 | 1105 | 38.5 | None | 8.14 |
| | 8 | 2.24 | 12.98 | 0.126 | 352.4 | 5.8 | 756 | 1205 | 33.8 | None | 8.15 |
| | 9 | 1.06 | 11.48 | 0.488 | 105.0 | 22.0 | 650 | 998 | 40.2 | None | 8.33 |
| | 10 | 2.35 | 13.00 | 0.178 | 352.3 | 8.6 | 768 | 1130 | 3.00 | None | 8.12 |
| | 11 | 3.15 | 12.58 | 0.187 | 212.5 | 15.8 | 672 | 1032 | 40.5 | None | 8.15 |
| | 12 | 1.88 | 13.00 | 0.140 | 345.6 | 9.5 | 712 | 1105 | 35.5 | None | 8.14 |
| | 13 | -- | -- | 1.10 | 102.0 | 15.2 | 697 | 1141 | 34.5 | None | 8.50 |
| | 14 | -- | -- | 2.201 | 40.3 | 14 | 698 | 1135 | 34.5 | None | 8.58 |

| | | | | | | | | | | | |
|---|---|---|---|---|---|---|---|---|---|---|---|
| Note: 1) εₚ represents a creep plastic elongation of an aged alloy under a condition of 816 °C, 221 MPa, and 100 h; 2) τ represents a service life of an aged alloy under a condition of 89 MPa and 927 °C, and δ represents an elongation after fracture of an aged alloy under a condition of 89 MPa and 927 °C; 3) *R*_{p0.2} represents a yield strength at a room temperature of an aged alloy, *R*ₘ represents a tensile strength at a room temperature of an aged alloy, and A represents a tensile elongation after fracture at room temperature of an aged alloy; 4) Welding crack is detected under the following conditions: detecting a surface quality of a weld joint of 5 mm plate according to National Energy Industry Standard NB/T 47013.5-2015 using two methods of fluorescent penetration and coloring penetration, and detecting an internal quality of a weld joint of 5 mm plate according to National Standard GB/T 3323.1-2019 using X-rays; 5) A unit for a content result of (Al - 1.8Sc)/Ti or Al + Ti + Mo in the table is wt%. | | | | | | | | | | | |

It can be seen from composition and performance data of the alloys of Examples and Comparative Examples in Table 1 and Table 2 that, in Examples 1 to 10, the weight percentages of Al, Ti and Mo satisfy the formula: 11.59 ≤ Al + Ti + Mo ≤ 13.0, all creep plastic elongations are 0.5% or less under the condition of 816 °C, 221 MPa, and 100 h, and all service lives of the alloys reach 200 h or more under the condition of 89 MPa and 927 °C, which meet the requirements for the design and the use of the advanced aerospace engine and the gas turbine. Especially in Examples 1 to 6, the weight percentages of Al, Ti and Mo satisfy the formula: 11.59 ≤ Al + Ti + Mo ≤ 13.0, and the weight percentages of Al, Sc and Ti satisfy the formula: 1.40 ≤ (Al - 1.8Sc)/Ti ≤ 2.6. When meeting these two formulas, the wrought nickel-based high-temperature alloys prepared in Examples 1 to 6 have excellent creep resistance and high-temperature service life, that is, all creep plastic elongations of the alloys are 0.2% or less under the condition of 816 °C, 221 MPa, and 100 h, and all service lives reach 300 h or more under the condition of 89 MPa and 927 °C.

In Comparative Examples 1 and 2, the sum of the weight percentages of Al, Ti and Mo, that is Al + Ti + Mo, are 11.49% and 11.40%, respectively. Although the service lives of the alloys in Comparative Examples 1 and 2 have reached 200 h under the condition of 89 MPa and 927 °C, the creep plastic elongations of the alloys are 0.5% or more under the condition of 816 °C, 221 MPa, and 100 h, and the tensile strengths *R*ₘ at the room temperature do not meet the requirement, which are lower than the desired value of 1035 MPa.

In Comparative Examples 3 and 4, the sum of the weight percentages of Al, Ti and Mo, that is Al + Ti + Mo, are 13.34% and 13.25%, respectively. The creep plastic elongations of the alloys in Comparative Examples 3 and 4 are 0.2% or less under the condition of 816 °C, 221 MPa, and 100 h, and the service lives have reached 300 h under the condition of 89 MPa and 927 °C, but welding cracks appear in the welding process. The sum of the weight percentages of Al, Ti and Mo in the alloys of Comparative Example 3 and Comparative Example 4 exceeds 13%, the precipitation strengthening and solid-solution strengthening effects are strong, and the yield strength and the tensile strength after aging are large. Although it has excellent creep resistance and service life, its welding performance is poor and welding cracks are observed.

In Comparative Examples 5 and 6, contents of Sc are 0.0005% and 0.19%, respectively. The content of Sc in the alloy of Comparative Example 5 is 0.0005% and this is too low. The creep plastic elongation of the alloy is 0.878% under the condition of 816 °C, 221 MPa, and 100h, and the service life is only 103.5 hours under the condition of 89 MPa and 927 °C. The content of Sc in the alloy of Comparative Example 6 is 0.19%, and this is too high. The creep plastic elongation of the alloy is 1.389% under the condition of 816 °C, 221 MPa, and 100h, and the service life is only 45 hours under the condition of 89 MPa and 927 °C. The creep resistances and service lives of Comparative Example 5 and Comparative Example 6 do not reach the desired values. It can be known that, the amount of Sc added will affect the creep resistance and service life of the alloy in the embodiments of the present invention. In the alloys of the embodiments of the present invention, the content of Sc is from 0.001% to 0.1%.

In Comparative Examples 7 and 8, contents of Nb are 0.25% and 2.23%, respectively. Low amount of Nb is used in the alloy of Comparative Example 7, and the content of Nb is 0.25%. The creep plastic elongation of the alloy is 0.808% under the condition of 816 °C, 221 MPa, and 100h, and the service life is 180 hours under the condition of 89 MPa and 927 °C, which do not reach the desired values. In Comparative Example 8, the content of Nb is 2.23%. The creep plastic elongation of the alloy is 0.126% under the condition of 816 °C, 221 MPa, and 100h, and the service life is 352.4 hours under the condition of 89 MPa and 927 °C. Although the alloy of Comparative Example 8 has excellent creep resistance and service life, its elongation after fracture is only 5.8% under the condition of 89 MPa and 927 °C, which does not meet the desired value of ≥ 10.0%. Although increasing the content of Nb in the alloy can improve the creep resistance and the service life, the elongation after fracture will be reduced if the content of Nb is too high. Therefore, the content of Nb in the alloy of the embodiments of the present invention is controlled at 0.81% to 2.00%.

In Comparative Examples 9 and 10, contents of Al are 1.45% and 3.15%, respectively. Low amount of Al is used in the alloy of Comparative Example 9, and the content of Al is 1.45%. The creep plastic elongation of the alloy is 0.488% under the condition of 816 °C, 221 MPa, and 100h, and the service life is only 105 hours under the condition of 89 MPa and 927 °C. Although the creep plastic elongation of the alloy in Comparative Example 9 has reached the desired value, the service life does not. In Comparative Example 10, the content of Al is 3.15%, the creep plastic elongation of the alloy is 0.178% under the condition of 816 °C, 221 MPa, and 100h, and the service life reaches 352.3 hours under the condition of 89 MPa and 927 °C. Although the alloy of Comparative Example 10 has excellent creep resistance and service life, its elongation after break is only 8.6% under the condition of 89 MPa and 927 °C, which does not reach the desired value of ≥ 10.0%. Although increasing the content of Al in the alloy can improve the creep resistance and service life, the elongation after fracture will be reduced if the content of Al is too high. Therefore, the content of Al in the alloy of the embodiments of the present invention is controlled at 2.00% to 3.00%.

In Comparative Examples 11 and 12, contents of Ti are 0.95% and 1.55%, respectively. In the alloy of Comparative Example 11, the content of Ti is 0.95%. The creep plastic elongation of the alloy is 0.187% under the condition of 816 °C, 221 MPa, and 100 h, and the service life is 212.5 hours under the condition of 89 MPa and 927 °C. Although the creep resistance and service life of the alloy of Comparative Example 11 can meet the requirements, its tensile strength *R*ₘ at the room temperature is 1032 MPa, which is lower than the desired value of 1035 MPa and does not meet the requirement. In Comparative Example 12, the content of Ti is 1.55%. The creep plastic elongation of the alloy is 0.14% under the condition of 816 °C, 221 MPa, and 100 h, and the service life is 345.6 hours under the condition of 89 MPa and 927 °C. Although the alloy of Comparative Example 12 has excellent creep resistance and service life, its elongation after fracture is only 9.5% under the condition of 89 MPa and 927 °C, which does not reach the desired value of ≥ 10.0%. In the alloy of the embodiments of the present invention, the preferred content of Ti is from 1.10% to 1.49%.

Comparative Example 13 is the commercial 282 alloy, and Comparative Example 14 is the alloy disclosed in the patent application with the application number 201910811805.7. The alloy densities of these two comparative examples are higher than those of the examples. No Sc is added to the alloys in Comparative Example 13 and Comparative Example 14. Low amount of Al, high amount of Ti and low amount of Nb are used in Comparative Example 13, and low amount of Al and low amount of Nb are used in Comparative Example 14. After testing, the creep plastic elongation of the alloy in Comparative Example 13 is 1.1% under the condition of 816 °C, 221 MPa, and 100 h, and the service life is 102 hours under the condition of 89 MPa and 927 °C. The creep plastic elongation of the alloy in Comparative Example 14 is 2.201% under the condition of 816 °C, 221 MPa, and 100 h, and the service life is 40.3 hours under the condition of 89 MPa and 927 °C. These performances do not meet the desired values, and could not meet the requirements of the precision hot-end parts of the advanced aerospace engine, the gas turbine and other equipment for a long-term service.

Reference throughout this specification to "an embodiment," "some embodiments," "an example," "a specific example," or "some examples," means that a particular feature, structure, material, or characteristic described in connection with the embodiment or example is included in at least one embodiment or example of the present invention. Thus, the appearances of the phrases in various places throughout this specification are not necessarily referring to the same embodiment or example of the present invention. Furthermore, the particular features, structures, materials, or characteristics may be combined in any suitable manner in one or more embodiments or examples. In addition, those skilled in the art can combine the different embodiments or examples and the features described thereof in this specification without mutually inconsistent.

## Claims

1. A creep-resistant, long-life wrought nickel-based high-temperature alloy, comprising: by weight, 0.04% to 0.08% of C, 18.50% to 21.50% of Cr, 9.00% to 11.00% of Co, 8.00% to 9.00% of Mo, 2.00% to 3.00% of Al, 1.10% to 1.49% of Ti, 0.81% to 2.00% of Nb, 0.003% to 0.009% of B, 0.001% to 0.10% of Sc, no more than 0. 02% of Zr, and the balance nickel and inevitable impurities, wherein contents in weight percentage of Al, Ti and Mo in the alloy satisfy a formula of 11.59% ≤ Al + Ti + Mo ≤ 13.0%, and wherein the impurities are W ≤ 0.50%, Fe ≤ 1.50%, Si ≤ 0.10%, Mn ≤ 0.10%, P ≤ 0.008%, S ≤ 0.008%, Ta ≤ 0.10%, and Cu ≤ 0.20%.

2. The creep-resistant, long-life wrought nickel-based high-temperature alloy according to claim 1, wherein contents in weight percentage of Al, Sc and Ti in the alloy satisfy a formula: 1.40% ≤ (Al - 1.8Sc)/Ti ≤ 2.6%.

3. The creep-resistant, long-life wrought nickel-based high-temperature alloy according to claim 2, wherein the contents in weight percentage of Al, Sc and Ti in the alloy satisfy a formula: 2.22% ≤ (Al - 1.8Sc)/Ti ≤ 2.25%.

4. The creep-resistant, long-life wrought nickel-based high-temperature alloy according to claim 3, wherein the content in weight percentage of Al is 2.50% to 3.00%.

5. Use of the creep-resistant, long-life wrought nickel-based high-temperature alloy according to any one of claims 1 to 4 in an aerospace engine.

6. Use of the creep-resistant, long-life wrought nickel-based high-temperature alloy according to any one of claims 1 to 4 in a gas turbine.

7. A method for preparing the creep-resistant, long-life wrought nickel-based high-temperature alloy according to any one of claims 1 to 4, comprising the following steps:
a. taking a designed amount of a raw material, smelting under vacuum, refining to remove gases, and casting into an alloy ingot under vacuum; and
b. performing forging-cogging on the alloy ingot obtained in the step a to obtain an electrode rod, re-melting the electrode rod to obtain a further alloy ingot, performing forging-cogging on the further alloy ingot to obtain a desired blank, and performing heat treatment after processing.

8. The method for preparing the creep-resistant, long-life wrought nickel-based high-temperature alloy according to claim 7, wherein in the step b, when a diameter of the alloy ingot obtained by remelting is ≤ 200 mm, no diffusion annealing is performed, and when the diameter of the alloy ingot obtained by remelting is > 200 mm, diffusion annealing is performed, wherein a diffusion annealing temperature is from 1150 to 1200 °C, and an annealing time is from 12 to 24 hours.

## Patentansprüche

1. Kriechbeständige, langlebige Hochtemperatur-Schmiedelegierung auf Nickelbasis, umfassend: 0,04 Gew.-% bis 0,08 Gew.-% C, 18,50 % bis 21,50 % Cr, 9,00 % bis 11,00% Co, 8,00% bis 9,00% Mo, 2,00% bis 3,00% Al, 1,10% bis 1,49% Ti, 0,81% bis 2,00% Nb, 0,003% bis 0,009% B, 0,001% bis 0,10% Sc, nicht mehr als 0,02% Zr und der Rest Nickel und unvermeidbare Verunreinigungen, wobei die Gehalte in Gewichtsprozent von Al, Ti und Mo in der Legierung die Formel 11,59% ≤ Al + Ti + Mo ≤ 13,0% erfüllen und wobei die Verunreinigungen W ≤ 0,50%, Fe ≤ 1,50%, Si ≤ 0,10%, Mn ≤ 0,10%, P ≤ 0,008%, S ≤ 0,008%, Ta ≤ 0,10% und Cu ≤ 0,20% sind.

2. Kriechbeständige, langlebige Hochtemperatur-Schmiedelegierung auf Nickelbasis gemäß Anspruch 1, wobei die Gehalte in Gewichtsprozent von Al, Sc und Ti in der Legierung der folgenden Formel entsprechen: 1,40% ≤ (Al - 1,8Sc)/Ti ≤ 2,6%.

3. Kriechbeständige, langlebige Hochtemperatur-Schmiedelegierung auf Nickelbasis gemäß Anspruch 2, wobei die Gehalte in Gewichtsprozent von Al, Sc und Ti in der Legierung der folgenden Formel entsprechen: 2,22% ≤ (Al - 1,8Sc)/Ti ≤ 2,25%.

4. Kriechfeste, langlebige Hochtemperatur-Schmiedelegierung auf Nickelbasis gemäß Anspruch 3, wobei der Gehalt an Al in Gewichtsprozent 2,50% bis 3,00% beträgt.

5. Verwendung der kriechfesten, langlebigen Hochtemperatur-Schmiedelegierung auf Nickelbasis nach einem der Ansprüche 1 bis 4 in einem Luft- und Raumfahrtmotor.

6. Verwendung der kriechfesten, langlebigen Hochtemperatur-Schmiedelegierung auf Nickelbasis nach einem der Ansprüche 1 bis 4 in einer Gasturbine.

7. Verfahren zur Herstellung einer kriechfesten, langlebigen Hochtemperatur-Schmiedelegierung auf Nickelbasis nach einem der Ansprüche 1 bis 4, umfassend die folgenden Schritte:
a. Entnahme einer bestimmten Menge eines Rohmaterials, Schmelzen unter Vakuum, Läutern zur Entfernung von Gasen und Gießen zu einem Legierungsblock unter Vakuum; und
b. Schmieden des in Schritt a erhaltenen Legierungsblocks, um einen Elektrodenstab zu erhalten, Umschmelzen des Elektrodenstabs, um einen weiteren Legierungsblock zu erhalten, Schmieden des weiteren Legierungsblocks, um einen gewünschten Rohling zu erhalten, und Wärmebehandlung nach der Verarbeitung.

8. Verfahren zur Herstellung der kriechfesten, langlebigen Hochtemperatur-Schmiedelegierung auf Nickelbasis gemäß Anspruch 7, wobei im Schritt b, wenn ein Durchmesser des durch Umschmelzen erhaltenen Legierungsblocks ≤ 200 mm ist, kein Diffusionsglühen durchgeführt wird, und wenn der Durchmesser des durch Umschmelzen erhaltenen Legierungsblocks > 200 mm ist, ein Diffusionsglühen durchgeführt wird, wobei eine Diffusionsglühtemperatur von 1150 bis 1200 °C und eine Glühzeit von 12 bis 24 Stunden beträgt.

## Revendications

1. Alliage à haute température à base de nickel ouvré résistant au fluage et à longue durée de vie, comprenant : en poids, 0,04 % à 0,08 % de C, 18,50 % à 21,50 % de Cr, 9,00 % à 11,00 % de Co, 8,00 % to 9,00 % of Mo, 2,00 % to 3,00 % of Al, 1,10 % to 1,49 % of Ti, 0,81 % to 2,00 % of Nb, 0,003 % à 0,009 % de B, 0,001 % à 0,10 % de Sc, pas plus de 0,02 % de Zr, et le reste étant du nickel et des impuretés inévitables, dans lequel les teneurs en pourcentage en poids d'Al, Ti et Mo dans l'alliage satisfont à une formule de 11,59 % ≤ Al + Ti + Mo ≤ 13,0 %, et dans lequel les impuretés sont W ≤ 0,50 %, Fe ≤ 1,50 %, Si ≤ 0,10 %, Mn ≤ 0,10 %, P ≤ 0,008 %, S ≤ 0,008 %, Ta ≤ 0,10 %, et Cu ≤ 0,20 %.

2. Alliage à haute température à base de nickel ouvré résistant au fluage et à longue durée de vie selon la revendication 1, dans lequel les teneurs en pourcentage en poids d'Al, Sc et Ti dans l'alliage satisfont à une formule : 1,40 % ≤ (Al - 1,8Sc)/Ti ≤ 2,6 %.

3. Alliage à haute température à base de nickel ouvré résistant au fluage et à longue durée de vie selon la revendication 2, dans lequel les teneurs en pourcentage en poids d'Al, Sc et Ti dans l'alliage satisfont à une formule : 2,22 % ≤ (Al - 1,8Sc)/Ti ≤ 2,25 %.

4. Alliage à haute température à base de nickel ouvré résistant au fluage et à longue durée de vie selon la revendication 3, dans lequel la teneur en pourcentage en poids d'Al est de 2,50 % à 3,00 %.

5. Utilisation de l'alliage à haute température à base de nickel ouvré résistant au fluage et à longue durée de vie selon l'une des revendications 1 à 4 dans un moteur aérospatial.

6. Utilisation de l'alliage à haute température à base de nickel ouvré résistant au fluage et à longue durée de vie selon l'une des revendications 1 à 4 dans une turbine à gaz.

7. Procédé de préparation de l'alliage à haute température à base de nickel ouvré résistant au fluage et à longue durée de vie selon l'une des revendications 1 à 4, comprenant les étapes suivantes :
a. le prélèvement d'une quantité prévue d'une matière première, la fusion sous vide, le raffinage pour éliminer des gaz, et la coulée dans un lingot d'alliage sous vide ; et
b. la réalisation d'un forgeage-crantage sur le lingot d'alliage obtenu à l'étape a pour obtenir une tige d'électrode, la refonte de la tige d'électrode pour obtenir un lingot d'alliage supplémentaire, la réalisation d'un forgeage-crantage sur le lingot d'alliage supplémentaire pour obtenir une ébauche souhaitée, et la réalisation d'un traitement thermique après transformation.

8. Procédé de préparation de l'alliage à haute température à base de nickel ouvré résistant au fluage et à longue durée de vie selon la revendication 7, dans lequel, à l'étape b, lorsqu'un diamètre du lingot d'alliage obtenu par refonte est ≤ 200 mm, aucun recuit de diffusion n'est réalisé, et lorsque le diamètre du lingot d'alliage obtenu par refonte est > 200 mm, un recuit de diffusion est réalisé, dans lequel une température de recuit de diffusion est de 1150 à 1200 °C, et un temps de recuit est de 12 à 24 heures.
